# EUROPÄISCHE PATENTSCHRIFT

(11) **EP 1 861 244 B1**
(45) Veröffentlichungstag und Bekanntmachung des Hinweises auf die Patenterteilung: **22.02.2012**
(21) Anmeldenummer: 06725277.5
(22) Anmeldetag: 23.03.2006
(51) Int. Cl.: B32B 3/12, A47B 13/08

(54) **BAUPLATTE, INSBESONDERE MÖBELPLATTE**
BUILDING BOARD, ESPECIALLY FURNITURE BOARD
PANNEAU DE CONSTRUCTION, NOTAMMENT PANNEAU POUR MEUBLE

(30) Priorität: 24.03.2005 DE 102005014276
(43) Veröffentlichungstag der Anmeldung: 05.12.2007
(60) Teilanmeldung: 07115506.3
(73) Patentinhaber: Fritz Egger GmbH & Co. OG, 3105 Unterradlberg (AT)
(72) Erfinder: RIEPERTINGER, Manfred, 83093 Bad Endorf (DE)
(74) Vertreter: Cohausz & Florack
(86) Internationale Anmeldenummer: PCT/EP2006/061000
(87) Internationale Veröffentlichungsnummer: WO 2006/100295

(56) Entgegenhaltungen:
- WO-A-97/15212
- DE-A1- 3 742 008
- DE-A1- 10 251 096
- DE-U1- 8 606 774
- DE-U1- 29 609 442
- DE-U1-202005 003 730
- US-A- 3 906 127
- US-A- 5 947 037

## Beschreibung

Die Erfindung betrifft ein plattenförmiges Bauteil zu Versorgungszwecken, insbesondere zur Aufnahme einer Leitung, mit einer zumindest teilweise aus einem Wabenmaterial bestehenden Kernlage, mit mindestens einer Deckplatte und mit mindestens einem die Kernlage verstärkenden Rahmenelement.

Ein plattenförmiges Bauteil mit diesem Aufbau ist aus der US 3,906,127 in Form einer Zeichentafel bekannt, wobei hier das Rahmenelement einen Hohlraum aufweist, der von einem U-Profil gebildet wird.

Ferner sind Bauplatten mit einer umfangseitigen Rahmenkonstruktion, wobei der Rahmen die Kernlage vollständig umgibt, aus dem Stand der Technik der DE 296 09 442 U1 bekannt. Bekannt ist es ebenfalls, dass eine Bauplatte nur aus dem Kernmaterial besteht, ohne dass eine Rahmenkonstruktion vorgesehen ist.

Problematisch an den vorgenannten Platten ist, dass jegliche Form von Versorgungsleitungen nicht in die Bauplatte integrierbar ist und gegebenenfalls zusätzlich Kanäle an der Außenseite der Bauplatte angebracht werden müssen, in denen die Versorgungsleitungen eingebracht werden können.

Weitere Bauplatten, die aber ebenfalls nicht zu Versorgungszwecken dienen, sind aus der US 5,947,037, der DE 102 51 096 A1, der WO 97/15212 A1, der DE 86 06 774 U1, der DE 20 2005 003 730 U1, der AT 307 019 A, der DE 200 22 048 U1 und der DE 44 22 449 A1 bekannt.

Der Erfindung liegt daher das technische Problem zugrunde, ein plattenförmiges Bauteil mit verbesserten Möglichkeiten der Integration von Leitungen anzugeben.

Das zuvor aufgezeigte technische Problem wird erfindungsgemäß durch ein plattenförmiges Bauteil mit den Merkmalen von Patentanspruch 1 gelöst.

Ausgestaltungen sind Gegenstand der Unteransprüche.

Somit ist erkannt worden, dass das mindestens eine Rahmenelement selbst als Kanal bildendes Element verwendet werden kann. Somit werden vom Rahmenelement zwei Funktionen übernommen, denn einerseits wird der Bauplatte eine verbesserte Stabilität verliehen und gleichzeitig können Leitungen in dem innenseitigen Kanal eingebracht werden.

Wenn die Bauplatte als Küchenarbeitsplatte eingesetzt wird, dann können in die Kanäle Wasserleitungen eingebracht werden, um damit unabhängig vom Ort des Wandauslasses die Montage eines Wasserauslaufhahnes zu ermöglichen.

Wenn die Bauplatte als Paneel, Tischplatte oder als Möbelplatte eingesetzt wird, dann können elektrische Leitungen eingebracht werden und damit unabhängig von der Wandinstallation Steckdosen, EDV-Anschlüsse, etc. an der Bauplatte vorgesehen werden. In dieser Weise können Lichtversorgungsleitungen oder Leitungen für Lautsprecher in die Bauplatte integriert werden.

Auch die Führung von Luft zur Versorgung eines Luftaustauschers, Heizlüfters, etc. ist möglich.

In bevorzugter Weise ist das mindestens eine Rahmenelement an der Außenseite der Kernlage angeordnet, so dass das Rahmenelement die Stabilität im Bereich dieser Außenkante verbessert. Dieses kann beispielsweise die Rückkante einer Arbeitsplatte sein, in die die vorgenannten Leitungen integriert werden können, die mit aus der Wand, an der die Arbeitsplatte befestigt wird, austretenden Leitungen verbunden werden.

Es ist weiter bevorzugt dass mehrere Rahmenelemente vorgesehen sind, die die Kernlage umfangseitig verstärken, wobei mindestens eines der Rahmenelemente einen Kanal bildet. Dieses Rahmenelement kann dann insbesondere wiederum an der Rückkante angeordnet sein.

Wenn alle Seitenkanten der Bauplatte ein Rahmenelement aufweisen, dann ergibt sich ein besonders stabiler Aufbau der Bauplatte, wobei entlang des gesamten Umfangs Kanäle vorhanden sind, in denen Leitungen integriert werden können. Dabei ist es dann weiterhin bevorzugt, dass die Kanäle benachbart angeordneter Rahmenelemente miteinander verbunden sind. Somit entsteht durchgehender umfangseitiger Kanal, der im Aufbau der Bauplatte integriert ist.

In weiter bevorzugter Weise weist mindestens ein Rahmenelement zur Außenseite hin mindestens eine Ausnehmung auf, die bis zum Kanal hin reicht und somit den Kanal von außen zugänglich macht. Die Ausnehmung kann verschiedene Funktionen übernehmen.

Zum einen kann die Ausnehmung für ein Anbringen von Anschlüssen für die im Kanal integrierte Leitung verwendet werden. Somit können Steckdosen, Wasseranschlüsse oder Luftanschlüsse an der Bauplatte befestigt werden, wodurch die Funktionalität der Bauplatte zusätzlich verbessert wird.

Zum anderen kann die Ausnehmung als einfaches Fach dienen, so dass der Innenraum des Kanals als Stauraum verwendet werden kann. Dieser Stauraum kann offen ausgestaltet werden, oder es wird eine Klappe zum Verschließen des Stauraums vorgesehen. Ebenso kann eine Schublade vorgesehen sein, die in der Ausnehmung aufgenommen wird.

Bei einer weiteren Ausgestaltung der vorliegenden Erfindung verläuft mindestens ein Rahmenelement durch das Material der Kernlage hindurch. Dadurch ist es möglich, eine Leitung in die Bauplatte zu integrieren und einen Auslass an einer Stelle der Oberfläche der Bauplatte vorzusehen.

Beispielsweise können Telefonkabel oder Stromkabel innerhalb der Bauplatte angeordnet werden, die dann für das Aufstellen eines Telefonapparates oder einer Lampe mitten auf einer als Tischplatte dienenden Bauplatte genutzt werden können. Dazu verläuft das Rahmenelement in besonders bevorzugter Weise mittig durch die Kernlage hindurch, so dass sich eine symmetrische Anordnung ergibt.

Es ist weiterhin bevorzugt das Rahmenelement aus einem extrudierbaren Kunststoff herzustellen. Dadurch können die Rahmenelemente in rationeller Weise hergestellt werden, wodurch insgesamt eine kostengünstige Herstellung ermöglicht wird. Die im Stand der Technik verwendeten Rahmenelemente aus Vollholz können daher bei gleicher Stabilität der Leichtbauplatte und verbesserter Funktionalität vermieden werden.

Vorzugsweise besteht das Rahmenelement aus einem Holz-Kunststoff-Compound, der aus einer Formmasse aus einem thermoplastischen Kunststoff und einer Verstärkungskomponente hergestellt ist. Beispielsweise kann der thermoplastische Kunststoff ein synthetischer Polyester und die Verstärkungskomponente ein organischer Füllstoff, insbesondere Holzfasern sein.

Bei einer weiteren Ausgestaltung der Erfindung bestehen die Deckplatten aus einem Holzwerkstoff, so dass diese in herkömmlicher Weise oberflächengestaltet werden können. Dazu gehören Farbgebung und Oberflächenstruktur. Insbesondere ist es möglich, die Oberfläche mit einer Laminatschicht, einem Furnier, einer Folienbeschichtung oder einer Melaminharzbeschichtung zu veredeln.

Um den Anforderungen an die verschiedenen Gestaltungsmöglichkeiten der Bauplatte gerecht werden zu können, ist es weiterhin bevorzugt, dass die obere Deckplatte und mindestens ein einen Rand der Bauplatte bildendes Rahmenelement mit einer Beschichtung versehen sind. Die Beschichtung kann beispielsweise mittels Postforming-Verfahrens aufgebracht werden. Die Beschichtung kann dazu aus einem Laminat bestehen. Ebenso sind auch Beschichtungen aus Kunststofffolien möglich, die nach einer Formgebung der Bauplatte auf die Oberfläche aufgebracht werden. Dadurch wird ein einheitliches Aussehen der Oberflächen im Bereich der Deckplatten und der Rahmenelemente ermöglicht.

Des Weiteren kann die Kernlage aus einem Wabenkern aus Pappmaterial oder aus Aluminium bestehen. Diese Ausgestaltung des Kernmaterials führt zu erheblichen Gewichtsreduzierungen.

Im Folgenden wird die Erfindung anhand von Ausführungsbeispielen näher erläutert, wobei auf die beigefügte Zeichnung Bezug genommen wird. In der Zeichnung zeigen
- Fig. 1: ein erstes Ausführungsbeispiel einer erfindungsgemäßen Bauplatte im Querschnitt parallel zu den Deckplatten,
- Fig. 2: die in Fig. 1 dargestellte Bauplatte im Querschnitt senkrecht zu den Deckplatten,
- Fig. 3: ein zweites Ausführungsbeispiel einer erfindungsgemäßen Bauplatte im Querschnitt parallel zu den Deckplatten,
- Fig. 4: die in Fig. 3 dargestellte Bauplatte im Querschnitt senkrecht zu den Deckplatten,
- Fig. 5: ein drittes Ausführungsbeispiel einer erfindungsgemäßen Bauplatte im Querschnitt senkrecht zu den Deckplatten,
- Fig. 6: ein viertes Ausführungsbeispiel einer erfindungsgemäßen Bauplatte in einer perspektivischen Darstellung,
- Fig. 7: ein fünftes Ausführungsbeispiel einer erfindungsgemäßen Bauplatte im Querschnitt parallel zu den Deckplatten,
- Fig. 8: die in Fig. 7 dargestellte Bauplatte im Querschnitt senkrecht zu den Deckplatten.

Die in den verschiedenen Figuren dargestellten Ausführungsbeispiele weisen einer Reihe von Gemeinsamkeiten auf, so dass gleiche Elemente mit gleichen Bezugszeichen gekennzeichnet sind, auch wenn zwischen den Ausführungsbeispielen geringe Unterschiede in der konkreten Ausgestaltung auftreten können.

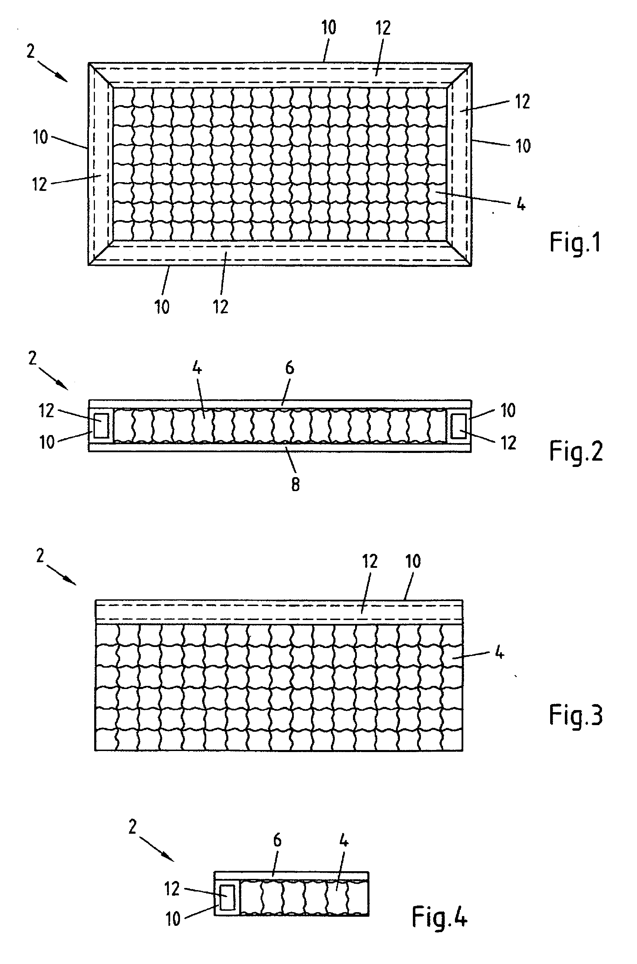

In den Fig. 1 und 2 ist ein erstes Ausführungsbeispiel einer erfindungsgemäßen Bauplatte 2 dargestellt. Die Bauplatte 2 weist eine Kernlage 4 auf, die zumindest teilweise aus einem Wabenmaterial aus Pappmaterial oder aus Aluminium besteht. Die Bauplatte 2 weist weiterhin eine obere Deckplatte 6 und eine unteren Deckplatte 8 auf, die aus einem Holzwerkstoff bestehen. Als Holzwerkstoff kommen dabei alle Werkstoffe in Frage, die entweder natürlichem Holz oder Teilen davon entsprechen oder die aus einer Verarbeitung von Holz entstanden sind, beispielsweise mitteldichte Faserplatte (MDF), hochdichte Faserplatte (HDF), Spanplatte, Oriented Strand Board Platte (OSB) oder Hartfaserplatte.

Des Weiteren weist die Bauplatte 2 vier die Kernlage 4 verstärkende Rahmenelemente 10 auf, die vorliegend die Kernlage 4 umfangseitig umgeben und diese somit stabilisieren. Wie insbesondere Fig. 2 zeigt, weisen die Rahmenelemente 10 ein Hohlkammerprofil auf und bilden somit jeweils innenseitig einen Kanal 12 aus. Dieser Kanal ist in Fig. 1 jeweils mit gestrichelten Linien dargestellt.

Wie Fig. 1 weiterhin zeigt, sind die Kanäle 12 benachbart angeordneter Rahmenelemente 10 miteinander verbunden. Dieses erfolgt hier durch einen winkligen Ansatz der Rahmenelemente an den Ecken, wodurch in einfacher Weise eine Verbindung aneinander angrenzender Kanäle erreicht wird.

Es ist auch möglich, nur eines der Rahmenelemente 10 mit einem Hohlkammerprofil auszubilden, während die anderen Rahmenelemente 10 massiv ausgebildet sind. Dann wäre es beispielsweise möglich, das mit einem Kanal versehene Rahmenelement 10 an einer Wand anzuordnen, am darin Leitungen zu verlegen.

Die Fig. 3 und 4 zeigen ein zweites Ausführungsbeispiel einer erfindungsgemäßen Bauplatte 2, die nur eine obere Deckplatte 6, nicht dagegen eine untere Deckplatte wie im ersten Ausführungsbeispiel. Darüber hinaus weist die Bauplatte 2 nur ein Rahmelement 10 auf, das vorliegend entlang einer außen liegenden Längskante der Bauplatte 2 angeordnet ist. Damit wird die Bauplatte 2 einerseits in Längsrichtung verstärkt und andererseits wird durch den integrierten Kanal 12 ein Verlegen einer Leitung ermöglicht.

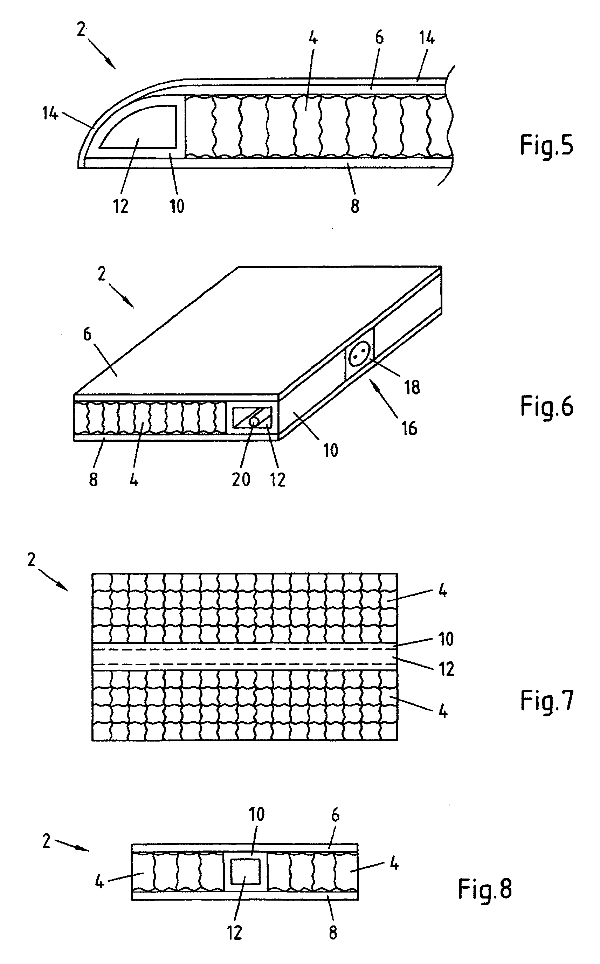

Fig. 5 zeigt ein Ausführungsbeispiel, bei dem das Rahmenelement 10 abgerundet ist und bei dem somit eine abgerundete Seitenkante der Bauplatte 2 entsteht. Hierbei ist der Querschnitt des Kanals 12 im Vergleich zu den vorangehenden Ausführungsbeispielen verringert, jedoch bleibt genügend Raum für das Verlegen einer Leitung.

Fig. 5 zeigt darüber hinaus, dass die obere Deckplatte 6 und das den Rand der Bauplatte 2 bildende Rahmenelement 10 mit einer Beschichtung 14 versehen sind. Dadurch wird eine geschlossene Oberfläche der Bauplatte sowohl auf der Oberseite als auch an der Seitenkante gewährleistet, während in der Seitenkante selbst ein Kanal integriert ist.

Fig. 6 zeigt ein Ausführungsbeispiel, bei dem ein Rahmenelement 10 zur Außenseite hin eine Ausnehmung 16 aufweist. In der Ausnehmung 16 ist eine Anschlussstelle in Form einer Steckdose 18 für eine im Rahmenelement 10 angeordnete elektrische Leitung 20 vorgesehen. Somit können nicht nur Leitungen 20 in der Bauplatte 2 integriert werden, sondern es besteht darüber hinaus die Möglichkeit, Anschlüsse in die Bauplatte 2 zu integrieren.

Darüber hinaus können einerseits auch andere Arten von Leitungen integriert werden, die andere Arten von Anschlüssen benötigen und andererseits kann die Ausnehmung auch zur oberen Deckplatte 6 oder zur unteren Deckplatte 8 hin geöffnet sein, so dass die Anschlüsse nach oben oder unten weisen.

Die Fig. 7 und 8 zeigen ein weiteres Ausführungsbeispiel einer erfindungsgemäßen Bauplatte 2, bei der ein Rahmenelement 10 durch das Material der Kernlage 4 mittig hindurch verläuft. Dadurch ist es möglich, Anschlüsse innerhalb der Deckplatten 6 oder 8 vorzusehen, die beabstandet von den Seitenkanten der Bauplatte 2 positioniert sind. Dadurch ergeben sich weitere Gestaltungsmöglichkeiten für das Führen und Anschließen von Leitungen in und an einer Bauplatte 2.

## Patentansprüche

1. Plattenförmiges Bauteil zu Versorgungszwecken, insbesondere zur Aufnahme einer Leitung (20),
- mit einer zumindest teilweise aus einem Wabenmaterial bestehenden Kernlage (4),
- mit mindestens einer Deckplatte (6, 8) und
- mit mindestens einem die Kernlage (4) verstärkenden Rahmenelement (10),
- wobei mindestens ein Rahmenelement (10) ein Hohlkammerprofil aufweist und innenseitig einen Kanal (12) bildet und wobei eine Leitung (20) durch den Kanal (12) verläuft.

2. Plattenförmiges Bauteil nach Anspruch 1,
**dadurch gekennzeichnet,**
**dass** das mindestens eine Rahmenelement (10) an der Außenseite der Kernlage (4) angeordnet ist.

3. Plattenförmiges Bauteil nach Anspruch 1 oder 2,
**dadurch gekennzeichnet,**
**dass** mehrere Rahmenelemente (10) vorgesehen sind, die die Kernlage (4) umfangseitig verstärken, wobei mindestens eines der Rahmenelemente (10) einen Kanal (12) bildet.

4. Plattenförmiges Bauteil nach Anspruch 3,
**dadurch gekennzeichnet,**
**dass** alle Rahmenelemente (10) einen Kanal (12) bilden.

5. Plattenförmiges Bauteil nach Anspruch 3 oder 4,
**dadurch gekennzeichnet,**
**dass** die Kanäle (12) benachbart angeordneter Rahmenelemente (10) miteinander verbunden sind.

6. Plattenförmiges Bauteil nach einem der Ansprüche 1 bis 5,
**dadurch gekennzeichnet,**
**dass** mindestens ein Rahmenelement (10) zur Außenseite hin eine Ausnehmung aufweist.

7. Plattenförmiges Bauteil nach Anspruch 6,
**dadurch gekennzeichnet,**
**dass** in der Ausnehmung (16) mindestens eine Anschlussstelle (18) für mindestens eine in dem Rahmenelement (10) angeordnete Leitung (20) vorgesehen ist.

8. Plattenförmiges Bauteil nach Anspruch 1,
**dadurch gekennzeichnet,**
**dass** mindestens ein Rahmenelement (10) durch das Material der Kernlage (4) hindurch verläuft.

9. Plattenförmiges Bauteil nach Anspruch 8,
**dadurch gekennzeichnet,**
**dass** das Rahmenelement (10) mittig durch die Kernlage (4) hindurch verläuft.

10. Plattenförmiges Bauteil nach einem Ansprüche 1 bis 9,
**dadurch gekennzeichnet,**
**dass** das mindestens eine Rahmenelement (10) aus einem extrudierbaren Kunststoff besteht.

11. Plattenförmiges Bauteil nach Anspruch 10,
**dadurch gekennzeichnet,**
**dass** das Rahmenelement (10) aus einem Holz-Kunststoff-Compound besteht.

12. Plattenförmiges Bauteil nach einem Ansprüche 1 bis 11,
**dadurch gekennzeichnet,**
**dass** die Deckplatten (6, 8) aus einem Holzwerkstoff bestehen.

13. Plattenförmiges Bauteil nach einem Ansprüche 1 bis 12,
**dadurch gekennzeichnet,**
**dass** die obere Deckplatte (6) und mindestens-ein einen Rand des Bauteils (2) bildendes Rahmenelement (10) mit einer Beschichtung (14) versehen sind.

14. Plattenförmiges Bauteil nach einem Ansprüche 1 bis 13,
**dadurch gekennzeichnet,**
**dass** die Kernlage aus einem Wabenkern aus Pappmaterial oder aus Aluminium besteht.

15. Verwendung einer Bauplatte, insbesondere Möbelplatte, mit einer zumindest teilweise aus einem Wabenmaterial bestehenden Kernlage (4), mit mindestens einer Decklage (6,8) und mit mindestens einem die Kernlage (4) verstärkenden Rahmenelement (10), wobei mindestens ein Rahmenelement (10) ein Hohlkammerprofil aufweist und innenseitig einen Kanal (12) bildet, und wobei mindestens ein Rahmenelement (10) zur Außenseite hin eine Ausnehmung (16) aufweist, als plattenförmiges Bauteil zu Versorgungszwecken, insbesondere zur Aufnahme einer Leitung (20).

16. Verwendung nach Anspruch 15, wobei das plattenförmige Bauteil nach einem der Ansprüche 1 bis 14 ausgebildet ist.

## Claims

1. A plate-shaped building component for supply purposes, in particular for receiving a conduit (20),
- comprising a core layer (4) at least partially made of a honey-comb material,
- comprising at least one cover plate (6, 8) and
- comprising at least one frame element (10) reinforcing the core layer (4),
- wherein at least one frame element (10) comprises a hollow chamber profile and forms a channel (12) on the inside, and wherein a conduit (20) extends through the channel (12).

2. The plate-shaped building component according to claim 1,
**characterized in**
**that** the at least one frame element (10) is arranged on the outside of the core layer (4).

3. The plate-shaped building component according to claim 1 or 2,
**characterized in**
**that** a plurality of frame elements (10) are provided which circumferentially reinforce the core layer (4), wherein at least one of the frame elements (10) forms a channel (12).

4. The plate-shaped building component according to claim 3,
**characterized in**
**that** all frame elements (10) form a channel (12).

5. The plate-shaped building component according to claim 3 or claim 4,
**characterized in**
**that** the channels (12) of frame elements (10) arranged adjacent to one another are connected to one another.

6. The plate-shaped building component according to any one of the claims 1 to 5,
**characterized in**
**that** at least one frame element (10) comprises a recess toward the outside.

7. The plate-shaped building component according to claim 6,
**characterized in**
**that** in the recess (16) at least one connecting point (18) for at least one conduit (20) arranged in the frame element (10) is provided.

8. The plate-shaped building component according to claim 1,
**characterized in**
**that** at least one frame element (10) extends through the material of the core layer (4).

9. The plate-shaped building component according to claim 8,
**characterized in**
**that** the frame element (10) extends centrally through the core layer (4).

10. The plate-shaped building component according to any one of the claims 1 to 9,
**characterized in**
**that** the at least one frame element (10) is made of an extrudable plastic.

11. The plate-shaped building component according to claim 10,
**characterized in**
**that** the frame element (10) is made of a wood-plastic compound.

12. The plate-shaped building component according to any of the claims 1 to 11,
**characterized in**
**that** the cover plates (6, 8) are made of a wood based material.

13. The plate-shaped building component according to any one of the claims 1 to 12,
**characterized in**
**that** the upper cover plate (6) and at least one frame element (10) forming a rim of the building component (2) is provided with a coating (14).

14. The plate-shaped building component according to any one of the claims 1 to 13,
**characterized in**
**that** the core layer consists of a honey-comb core made of cardboard material or aluminum.

15. A use of a building board, in particular furniture board, comprising a core layer (4) that is at least partially made of a honey-comb material, at least one cover layer (6, 8), and at least one frame element (10) reinforcing the core layer (4), wherein at least one frame element (10) comprises a hollow chamber profile and forms a channel (12) on the inside, and wherein at least one frame element (10) comprises a recess (16) toward the outside, as a plate-shaped building component for supply purposes, in particular for receiving a conduit (20).

16. The use according to claim 15, wherein the plate-shaped building component is formed according to any one of the claims 1 to 14.

## Revendications

1. Composant en forme de plaque pour des besoins d'alimentation, en particulier pour le logement d'une ligne (20),
- comprenant une couche centrale (4) conçue au moins partiellement à base d'un matériau alvéolaire,
- comprenant au moins une plaque de recouvrement (6, 8) et
- comprenant au moins un élément de cadre (10) renforçant la couche centrale (4),
- au moins un élément de cadre (10) présentant un profil de chambre creuse et formant côté intérieur un canal (12) et une ligne (20) s'étendant à travers le canal (12).

2. Composant en forme de plaque selon la revendication 1,
**caractérisé**
**en ce que** le au moins un élément de cadre (10) est disposé sur le côté extérieur de la couche centrale (4).

3. Composant en forme de plaque selon la revendication 1 ou 2,
**caractérisé**
**en ce que** plusieurs éléments de cadre (10) sont prévus, dès qui renforcent la couche centrale (4) côté périphérie, au moins l'un des éléments de cadre (10) formant un canal (12).

4. Composant en forme de plaque selon la revendication 3,
**caractérisé**
**en ce que** tous les éléments de cadre (10) forment un canal (12).

5. Composant en forme de plaque selon la revendication 3 ou 4,
**caractérisé**
**en ce que** les canaux (12) d'éléments de cadre (10) disposés à proximité sont liés les uns aux autres.

6. Composant en forme de plaque selon l'une des revendications 1 à 5,
**caractérisé**
**en ce qu'**au moins un élément de cadre (10) présente un évidement en direction du côté extérieur.

7. Composant en forme de plaque selon la revendication 6,
**caractérisé**
**en ce qu'**au moins un point de raccordement (18) est prévu dans l'évidement (16) pour au moins une ligne (20) disposée dans l'élément de cadre (10).

8. Composant en forme de plaque selon la revendication 1,
**caractérisé**
**en ce qu'** au moins un élément de cadre (10) passe à travers le matériau de la couche centrale (4).

9. Composant en forme de plaque selon la revendication 8,
**caractérisé**
**en ce que** l'élément de cadre (10) passe au centre à travers la couche centrale (4).

10. Composant en forme de plaque selon l'une des revendications 1 à 9,
**caractérisé**
**en ce que** le au moins un élément de cadre (10) est à base d'une matière synthétique extrudable.

11. Composant en forme de plaque selon la revendication 10,
**caractérisé**
**en ce que** l'élément de cadre (10) est à base d'un composite bois-matière synthétique.

12. Composant en forme de plaque selon l'une des revendications 1 à 11,
**caractérisé**
**en ce que** les plaques de recouvrement (6, 8) sont à base d'un produit dérivé du bois.

13. Composant en forme de plaque selon l'une des revendications 1 à 12,
**caractérisé**
**en ce que** la plaque de recouvrement (6) supérieure et au moins un élément de cadre (10) formant un bord du composant (2) sont dotés d'un recouvrement (14).

14. Composant en forme de plaque selon l'une des revendications 1 à 13,
**caractérisé**
**en ce que** la couche centrale est à base d'un noyau alvéolaire à base de matériau de carton ou à base d'aluminium.

15. Utilisation d'une plaque de construction, en particulier d'une plaque formant meuble, comprenant une couche centrale (4) à base d'au moins partiellement d'un matériau alvéolaire, comprenant au moins une couche de recouvrement (6, 8) et au moins un élément de cadre (10) renforçant la couche centrale (4), au moins un élément de cadre (10) présentant un profil de chambre creuse et formant côté intérieur un canal (12), et au moins un élément de cadre (10) présentant en direction du côté extérieur un évidement (16) en direction du côté extérieur, comme composant en forme de plaque pour des besoins d'alimentation, en particulier pour le logement d'une ligne (20).

16. Utilisation selon la revendication 15, le composant en forme de plaque étant conçu selon l'une des revendications 1 à 14.
